# EUROPÄISCHE PATENTSCHRIFT

(11) **EP 0 570 626 B1**
(45) Veröffentlichungstag und Bekanntmachung des Hinweises auf die Patenterteilung: **02.11.1995**
(21) Anmeldenummer: 92121552.1
(22) Anmeldetag: 18.12.1992
(51) Int. Cl.: F16C 11/08, B62D 7/16

(54) **Schwenklager**
Swivel bearing
Palier pivotant

(30) Priorität: 20.05.1992 DE 4216557
(43) Veröffentlichungstag der Anmeldung: 24.11.1993
(73) Patentinhaber: Firma Carl Freudenberg, 69469 Weinheim (DE)
(72) Erfinder: Gruber, Walter, W-6940 Weinheim (DE)

(56) Entgegenhaltungen:
- DE-A- 2 234 388
- DE-A- 3 033 784
- DE-A- 4 026 652
- FR-A- 2 562 967
- FR-A- 2 642 121
- GB-A- 2 033 955
- GB-A- 2 081 369
- PATENT ABSTRACTS OF JAPAN, unexamined applications, M Sektion, Band 13, Nr. 373, 18. August 1989 THE PATENT OFFICE JAPANESE GOVERNMENT Seite 27 M 861
- PATENT ABSTRACTS OF JAPAN, unexamined applications, M Sektion, Band 15, Nr. 109, 15. MUrz 1991 THE PATENT OFFICE JAPANESE GOVERNMENT Seite 78 M 1093

## Beschreibung

Die Erfindung betrifft ein Schwenklager, umfassend einen in einem Gehäuse aufgenommenen Kugelkörper, dem eine Befestigungsstange im wesentlichen zentrisch zugeordnet ist, wobei der Kugelkörper radial außenseitig durch einen Führungsring aus einem Hartwerkstoff im Gehäuse abgestützt ist und wobei zumindest ein Faltenbalg eine Abdichtung zwischen Gehäuse (1) und Befestigungsstange (10) bildet.

Ein solches Schwenklager ist aus der JP-A-1-126 415 bekannt. Die Aufgabe, die dem vorbekannten Lager zugrundeliegt, wird darin gesehen, seine Abmessungen zu reduzieren und die Gebrauchseigenschaften zu verbessern. Die Befestigungsstange und der Kugelkörper sind einstückig ineinander übergehend ausgebildet und bestehen aus einem metallischen Werkstoff. In radialer Richtung außenseitig ist der Kugelkörper von einem Zwischenring aus Gummi umschlossen, der selbstschmierende Eigenschaften aufweist. Die Zwischenschicht ihrerseits ist in sämtlichen Bereichen ihrer Erstreckung von übereinstimmender Dicke und im wesentlichen kugelförmig ausgebildet. Die Zwischenschicht ist in einem Führungsring gelagert, der außenseitig von einer zylinderförmigen Hülse aus metallischem Werkstoff umschlossen ist. Zwischen der metallischen Hülse und dem Führungsring ist in axialer Richtung beiderseits jeweils ein axiales Ende eines Faltenbalgs befestigt, der mit seinem axial anderen Ende die Befestigungsstange dichtend umschließt. Dabei ist allerdings zu beachten, daß insbesondere die axiale Nachgiebigkeit des Gehäuses in bezug auf den Kugelkörper wenig zufriedenstellend ist.

Aus der GB-A-2 081 369 ist ein Kugelgelenk für Lenkgestänge von Kraftfahrzeugen bekannt, bei dem eine Schubfeder zwischen einem im Gelenkgehäuse elastisch gelagerten und mit einer Durchtrittsbohrung für den Gelenkzapfen versehenen kalottenförmigen Lagerkörper angeordnet ist, wobei der Lagerkörper vom Gelenkzapfen durchsetzt ist. Die Schubfeder besteht aus einer elastischen Buchse, die fest haftend zwischen einer inneren und einer äußeren Metallhülse angeordnet ist, wobei die innere Hülse am Gelenkzapfen und die äußere Hülse in der Bohrung des Lagerkörpers angeordnet ist. Zusätzlich zu den allseitigen Winkelbewegungen sollen Zug- und Schubkräfte in axialer Richtung gedämpft werden können.

Aus der DE 40 26 652 A1 ist eine Lagerung für einen Gangschalthebel bekannt, der in einer Schaltkugel aufgenommen und von einem Montageflansch umschlossen ist, wobei eine ringförmig ausgebildete, schwingungsisolierende Zwischenschicht aus gummielastischem Werkstoff zwischen der Schaltkugel und dem Gangschalthebel angeordnet ist. Die Schaltkugel ist bevorzugt relativ verdrehbar in einem Kugelkäfig aus polymerem Werkstoff gelagert, der durch ein ringförmig ausgebildetes Federelement auf einem Montageflansch abgestützt ist.

Aus der GB-A-2 033 955 ist ein Schwenklager bekannt, das eine zylindrische Befestigungsstange umfaßt, die von einem anvulkanisierten Kugelkörper aus gummielastischem Werkstoff umschlossen ist. Radial außenseitig ist der Kugelkörper von einem entsprechend ausgebildeten im wesentlichen verschleißfesten Material umschlossen, das in einem Führungsring gelagert ist, wobei der Führungsring von einem zylinderförmigen Gehäuse umschlossen ist. Das vorbekannte Schwenklager erlaubt nur geringe kardanische Auslenkbewegungen, was im Hinblick auf die Verwendung als Gelenk für Achsstreben oder Lenker in Kraftfahrzeugen nicht ausreichend ist.

Ein weiteres Schwenklager ist aus der EP-PS 0 302 180 bekannt. Das Schwenklager ist als Gelenk für Achsstreben, Lenker oder dergleichen in Kraftfahrzeugen ausgebildet und weist einen Kugelkörper auf, der zumindest einen Gelenkzapfen umfangsseitig starr umschließt. Zwischen dem Gehäuse und dem Gelenkzapfen ist ein hülsenförmiger Gelenkkörper aus elastomerem Werkstoff unter radialer Vorspannung angeordnet. An den beiden Stirnseiten des elastomeren Gelenkkörpers befinden sich Stützringe, mit denen er in dem Gehäuse gehalten ist und die gleichzeitig eine Begrenzung der kardanischen Auslenkbewegungen bedingen. Dabei ist allerdings zu beachten, daß die Gebrauchseigenschaften des vorbekannten Schwenklagers wenig befriedigend sind. Insbesondere kardanische Winkel von mehr als 10° und eine kräftearme, kardanische Bewegung sind mit dem bekannten Schwenklager nicht zu erreichen. Durch die Ausgestaltung der Zwischenschicht aus Gummi sind außerdem die Isolationseigenschaften betriebsbedingt eingeleiteter Schwingungen wenig befriedigend.

Der Erfindung liegt die Aufgabe zugrunde, ein Schwenklager der vorbekannten Art derart weiterzuentwickeln, daß kardanische Winkel von mehr als 10° besonders kräftearm aufgenommen werden können und daß das Schwenklager verbesserte Isolationseigenschaften betriebsbedingt eingeleiteter Schwingungen aufweist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der gestellten Aufgabe ist es vorgesehen, daß der Kugelkörper radial innenseitig durch eine ringförmig ausgebildete Zwischenschicht aus Gummi auf der Befestigungsstange abgestützt ist, daß das Gehäuse einen im wesentlichen hohlkugelförmigen Querschnitt aufweist und beiderseits im Bereich seiner stirnseitigen Begrenzungen radial nach innen gerichtete Anschlagpuffer aufweist, die zur Begrenzung von extremen Relativverlagerungen in axialer Richtung an die Zwischenschicht anlegbar sind und daß die Anschlagpuffer und die Zwischenschicht auf den einander zugewandten Seiten ein aneinander angepaßtes Oberflächenprofil aufweisen. Das Schwenklager gelangt bevorzugt im Bereich von Radführungselementen und der Lenkung von Kraftfahrzeugen zur Anwendung. In Betrieb treten neben großen Kräften in axialer und radialer Richtung auch große Bewegungen in den Gelenkstellen auf. Das erfindungsgemäße Schwenklager erfüllt extreme Randbedingungen und kann z. B. hohe Axialkräfte von mehr als 0,5 kN, große Radialkräfte von mehr als 1 kN und sehr große kardanische Winkel von mehr als 10° kräftearm aufnehmen. Durch den Faltenbalg, der das Gehäuse gegenüber dem Kugelkörper abdichtet sind sehr gute Gebrauchseigenschaften während einer langen Gebrauchsdauer gewährleistet. Das Schwenklager ist dadurch vor äußeren Einflüssen gut geschützt.

Das im wesentlichen hohlkugelförmigem Gehäuse kann in axialer Richtung geteilt und zweiteilig ausgebildet sein, wobei die Zwischenschicht mit dem Kugelkörper und der Befestigungsstange adhäsiv verbunden ist. Das zweiteilige Gehäuse kann zur Vermeidung von Zugspannungen innerhalb der Führungsrings aus Gummi kalibriert sein, wodurch die Gebrauchsdauer weiter erhöht wird.

Zur Begrenzung von Relativverlagerungen des Gehäuses in axialer Richtung zu dem Kugelkörper weist das Gehäuse beiderseits im Bereich seiner stirnseitigen Begrenzungen radial nach innen gerichtete Anschlagpuffer auf.

Dadurch, daß der Führungsring, der auf der dem Kugelkörper zugewandten Seite hohlkugelförmig ausgebildet ist, eine geringere axiale Ausdehnung aufweist, als der Kugelkörper, ist eine ausgezeichnete kardanische Beweglichkeit gewährleistet.

Gemäß einer vorteilhaften Ausgestaltung ist es vorgesehen, daß die einander zugewandten Oberflächenbereiche des Führungsrings und/oder des Kugelkörpe mit einer reibungsvermindernden Oberflächenbeschichtung versehen sind oder daß der Führungsring aus glasfaserverstärktem PTFE besteht. Eine gute eine kräftearme Relativbeweglichkeit zwischen dem Führungsring und dem von dem Führungsring teilweise umschlossenen Kugelkörper wird dadurch bewirkt unter Vermeidung von gebrauchsdauerverringerndem Verschleiß. Hinsichtlich einer besonders einfachen, kostengünstigen Herstellbarkeit, kann der Führungsring aus glasfaserverstärktem Polytetrafluoräthylen bestehen. Neben guten Gebrauchseigenschaften zeichnet sich ein derartiges Schwenklager durch eine vergleichsweise geringe Masse aus. Der Führungsring und die Zwischenschicht können adhäsiv miteinander verbunden sein.

Die Zwischenschicht aus Gummi kann einen im wesentlichen rechteckigen Querschnitt mit einer radialen und einer axialen Ausdehnung aufweisen, wobei das Verhältnis von radialer zu axialer Ausdehnung 1:1,5 bis 1:10, bevorzugt 1:2 bis 1:5 beträgt. Ein derartiges Verhältnis hat sich hinsichtlich guter Gebrauchseigenschaften als vorteilhaft bewährt. Einerseits ist durch eine derart ausgebildete Zwischenschicht aus Gummi eine gute Isolation betriebsbedingt eingeleiteter Schwingungen gewährleistet bei ausreichender Nachgiebigkeit des Gehäuses bezogen auf den Kugelkörper in radialer und in axialer Richtung und andererseits eine genaue Positionierung der relativ zueinander beweglichen Teile des Schwenklagers.

Das Gehäuse kann im Bereich seiner stirnseitigen Begrenzungen Haltevorrichtungen aufweisen, in denen der Faltenbalg aufgenommen ist. Hinsichtlich geringer Fertigungskosten und einer einfachen Montage ist es vorteilhaft, wenn die Haltevorrichtung und die Anschlagpuffer einstückig ineinander übergehend ausgebildet sind und Bestandteile des Gehäuses bilden. Die in radialer Richtung nach innen weisenden Schenkel der Gehäuseteile können dazu durch axiales Umrollen des Materials verrundet werden. Diese Verrundung erstreckt sich über den gesamten Umfangsbereich, so daß einerseits eine Abstützung des Gehäuses bei axialer Bewegung über die Zwischenschicht am Gelenk erfolgt und andererseits eine Aufnahme für einen Faltenbalg entsteht. Der Faltenbalg schützt das Kugelgelenk vor Verschmutzung und Verschleiß.

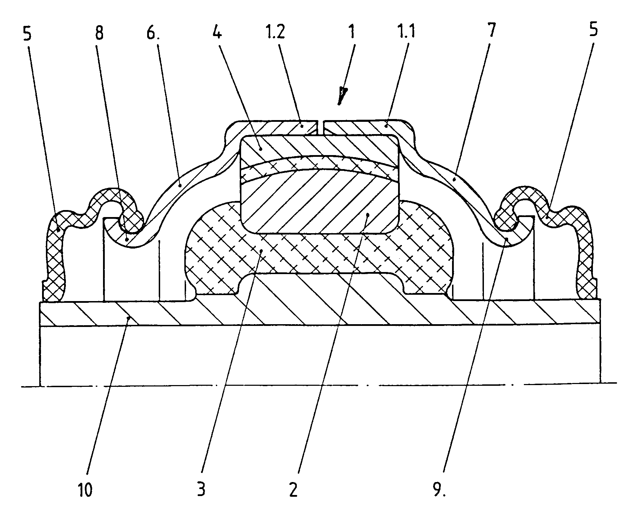

Das erfindungsgemäße Schwenklager wird nachfolgend anhand der als Anlage beigefügten Zeichnung weiter erläutert. In der Zeichnung ist ein Ausführungsbeispiele des Schwenklagers dargestellt.

In dem Ausführungsbeispiel ist ein Schwenklager gezeigt, das im wesentlichen aus einem zweiteiligen Gehäuse 1, 1.1, 1.2, einem Kugelkörper 2, einer Zwischenschicht 3 aus Gummi und einem Führungsring 4 aus einem Hartwerkstoff besteht. Die beiden Gehäuseteile 1.1, 1.2 sind im wesentlichen hohlkugelförmig ausgebildet und in ihrer Form an die Oberfläche des Kugelkörpers 2 angepaßt. Der Kugelkörper 2 und die Befestigungsstange 10, die in diesem Beispiel rohrförmig ausgebildet ist, sind kardanisch innerhalb des Gehäuses 1 gelagert. Der Führungsring 4, der einerseits im Gehäuse 1 und andererseits auf dem Kugelkörper 2 abgestützt ist, besteht in diesem Ausführungsbeispiel aus einem glasfaserverstärkten Kunststoff. Die Zwischenschicht 3 aus Gummi ist ringförmig ausgebildet und umschließt die Befestigungsstange in einem Bereich, der in seinem Außendurchmesser erweitert ist und ein für die Vulkanisation günstiges Profil aufweist. Die Gehäuseteile 1.1, 1.2 sind sowohl als Anschlag (Anschlagpuffer 6, 7) als auch als Haltevorrichtungen 8, 9 ausgebildet. In den Haltevorrichtungen 8, 9 wird jeweils ein axiales Ende eines zur Anwendung gelangenden Faltenbalgs 5 aufgenommen, der mit seinem anderen axialen Ende die Befestigungsstange 10 unter radialer Vorspannung umschließt. Eine Relativverlagerung zwischen der Befestigungsstange 10 und den Faltenbälgen 5 findet nicht statt. Die Faltenbälge 5 schützen das Kugelgelenk 2 vor Verschmutzung und Verschleiß und gewährleisten dadurch auch unter ungünstigen Einsatzbedingungen eine reibungsarme Relativbeweglichkeit und somit gute Gebrauchseigenschaften während einer langen Gebrauchsdauer.

## Patentansprüche

1. Schwenklager, umfassend einen in einem Gehäuse (1) aufgenommenen Kugelkörper (2), dem eine Befestigungsstange (10) im wesentlichen zentrisch zugeordnet ist, wobei der Kugelkörper (2) radial außenseitig durch einen Führungsring (4) aus einem Hartwerkstoff im Gehäuse (1) abgestützt ist und wobei zumindest ein Faltenbalg (5) eine Abdichtung zwischen Gehäuse (1) und Befestigungsstange (10) bildet, dadurch gekennzeichnet, daß der Kugelkörper (2) radial innenseitig durch eine ringförmig ausgebildete Zwischenschicht (3) aus Gummi auf der Befestigungsstange (10) abgestützt ist, daß das Gehäuse (1) einen im wesentlichen hohlkugelförmigen Querschnitt aufweist und beiderseits im Bereich seiner stirnseitigen Begrenzungen radial nach innen gerichtete Anschlagpuffer (6, 7) aufweist, die zur Begrenzung von extremen Relativverlagerungen in axialer Richtung an die Zwischenschicht (3) anlegbar sind und daß die Anschlagpuffer (6, 7) und die Zwischenschicht (3) auf den einander zugewandten Seiten ein aneinander angepaßtes Oberflächenprofil aufweist.

2. Schwenklager nach Anspruch 1, dadurch gekennzeichnet, daß die einander zugewandten Oberflächenbereiche des Führungsrings (4) und/oder des Kugelkörpers (2) mit einer reibungsvermindernden Oberflächenbeschichtung versehen sind.

3. Schwenklager nach Anspruch 1, dadurch gekennzeichnet, daß der Führungsring (4) aus glasfaserverstärktem PTFE besteht.

4. Schwenklager nach Anspruch 1, dadurch gekennzeichnet, daß die Zwischenschicht (3) aus Gummi einen im wesentlichen rechteckigen Querschnitt mit einer radialen und einer axialen Ausdehnung aufweist und daß das Verhältnis von radialer zu axialer Ausdehnung 1:1,5 bis 1:10 beträgt.

5. Schwenklager nach Anspruch 4, dadurch gekennzeichnet, daß das Verhältnis 1:2 bis 1:5 beträgt.

6. Schwenklager nach Anspruch 1 bis 5, dadurch gekennzeichnet, daß der Führungsring (4) am Gehäuse (1) abgestützt ist.

7. Schwenklager nach Anspruch 1 bis 6, dadurch gekennzeichnet, daß die Zwischenschicht (3) mit dem Kugelkörper (2) und der Befestigungsstange (10) adhäsiv verbunden ist.

8. Schwenklager nach Anspruch 1 bis 7, dadurch gekennzeichnet, daß das Gehäuse (1) im Bereich seiner stirnseitigen Begrenzungen Haltevorrichtungen (8, 9) aufweist, in denen jeweils ein Faltenbalg (5) aufgenommen ist.

9. Schwenklager nach Anspruch 1 bis 8, dadurch gekennzeichnet, daß die Haltevorrichtungen (8, 9) und die Anschlagpuffer (6, 7) einstückig ineinander übergehend ausgebildet sind.

## Claims

1. A swivel bearing, comprising a spherical body (2) which is received in a housing (1) and to which an attachment rod (10) is assigned substantially centrally, said spherical body (2) being supported in the housing (1) radially on the outer side by a guide ring (4) made of a hard material, and at least one bellows (5) forming a seal between the housing (1) and the attachment rod (10), characterized in that the spherical body (2) is supported on the attachment rod (10) radially on the inner side by an intermediate layer (3) of annular design and made of rubber, in that the housing (1) has a substantially hollow-spherical cross-section and has, on both sides in the region of its end-face boundaries, stop buffers (6, 7) which are directed radially inwards and can be placed against the intermediate layer (3) to limit extreme relative displacements in the axial direction, and in that the stop buffers (6, 7) and the intermediate layer (3) have, on the mutually facing sides, a mutually adapted surface profile.

2. A swivel bearing according to claim 1, characterized in that the mutually facing surface regions of the guide ring (4) and/or of the spherical body (2) are provided with a friction-reducing surface coating.

3. A swivel bearing according to claim 1, characterized in that the guide ring (4) consists of glass-fibre reinforced PTFE.

4. A swivel bearing according to claim 1, characterized in that the intermediate layer (3) made of rubber has a substantially rectangular cross-section with a radial and an axial extent, and in that the ratio of the radial extent to the axial extent is 1:1.5 to 1:10.

5. A swivel bearing according to claim 4, characterized in that the ratio is 1:2 to 1:5.

6. A swivel bearing according to any of claims 1 to 5, characterized in that the guide ring (4) is supported on the housing (1).

7. A swivel bearing according to any of claims 1 to 6, characterized in that the intermediate layer (3) is adhesively connected to the spherical body (2) and the attachment rod (10).

8. A swivel bearing according to any of claims 1 to 7, characterized in that, in the region of its end-face boundaries, the housing (1) has holding devices (8, 9) in which a bellows (5) is received in each case.

9. A swivel bearing according to any of claims 1 to 8, characterized in that the holding devices (8, 9) and the stop buffers (6, 7) are designed to merge integrally into one another.

## Revendications

1. Palier pivotant, comprenant un corps sphérique (2), logé dans un carter (1), auquel est associé une tige de fixation (10) de manière sensiblement centrée, le corps sphérique (2) étant appuyé dans le carter (1), sur le côté extérieur dans le sens radial, au moyen d'une bague de guidage (4) faite d'un matériau dur et au moins un soufflet (5) formant une étanchéité entre le carter (1) et la tige de fixation (10), caractérisé en ce que le corps sphérique (2) est appuyé sur la tige de fixation (10), sur le côté intérieur dans le sens radial, au moyen d'une couche intermédiaire (3) en caoutchouc ayant une forme annulaire, en ce que le carter (1) a une section qui a sensiblement la forme d'une sphère creuse et est pourvu, sur les deux côtés, dans la région de ses limites frontales, de butoirs d'arrêt (6, 7) dirigés radialement vers l'intérieur, qui peuvent se mettre contre la couche intermédiaire (3) pour limiter des déplacements relatifs extrêmes dans la direction axiale, et en ce que les butoirs d'arrêt (6, 7) et la couche intermédiaire (3) présentent, sur leurs côtés se faisant face, des surfaces dont les profils sont adaptés l'un à l'autre.

2. Palier pivotant selon la revendication 1, caractérisé en ce que les parties des surfaces de la bague de guidage (4) et/ou du corps sphérique (2) se faisant facesont pourvues d'un revêtement superficiel réduisant les frottements.

3. Palier pivotant selon la revendication 1, caractérisé en ce que la bague de guidage (4) est faite de PTFE renforcé par des fibres de verre.

4. Palier pivotant selon la revendication 1, caractérisé en ce que la couche intermédiaire (3) en caoutchouc a une section transversale sensiblement rectangulaire présentant une dimension radiale et une dimension axiale et que le rapport entre la dimension radiale et la dimension axiale va de 1:1,5 à 1:10.

5. Palier pivotant selon la revendication 4, caractérisé en ce que le rapport va de 1:2 à 1:5.

6. Palier pivotant selon les revendications 1 à 5, caractérisé en ce que la bague de guidage (4) est appuyée sur le carter (1).

7. Palier pivotant selon les revendications 1 à 6, caractérisé en ce que la couche intermédiaire (3) est reliée au corps sphérique (2) et à la tige de fixation (10) de manière adhésive.

8. Palier pivotant selon les revendications 1 à 7, caractérisé en ce que le carter (1) est pourvu, dans la région de ses limites frontales, de dispositifs de fixation (8, 9) qui reçoivent chacun un soufflet (5).

9. Palier pivotant selon les revendications 1 à 8, caractérisé en ce que les dispositifs de fixation (8, 9) et les butoirs d'arrêt (6, 7), formés d'un seul morceau, se confondent.
